# EUROPEAN PATENT APPLICATION

(11) **EP 4 726 490 A1**
(43) Date of publication of application: **15.04.2026**
(21) Application number: 24206250.3
(22) Date of filing: 11.10.2024
(51) Int. Cl.: G05D 1/693, G05D 105/28, G05D 109/10, G05D 107/70, B65G 43/00

(54) **CONTROLLING ROBOTIC VEHICLES IN AN AUTOMATED STORAGE AND RETRIEVAL SYSTEM**

(71) Applicant: AutoStore Technology AS, 5578 Nedre Vats (NO)
(72) Inventor: SKOGEN, Torgeir Woldstad, 5578 Nedre Vats (NO)
(74) Representative: Kilburn & Strode LLP

(57) **Abstract**

The disclosure relates to a method of controlling a robotic vehicle in an automated storage and retrieval system.
The method comprises determining (S600) to route a first robotic vehicle to a first location in the automated storage and retrieval system, and determining (S605) that a second robotic vehicle is occupying the first location. A first command is sent (S610) in response to determining that the second robotic vehicle is occupying the first location. The first command comprises commanding the first robotic vehicle to travel to a second location that is proximal to the first location. A second command is buffered (S615) for the first robotic vehicle while the second robotic vehicle is occupying the first location, and sent (S620) to the first robotic vehicle when the second robotic vehicle has vacated the first location.

## Description

### TECHNICAL FIELD

The disclosure relates to controlling a robot vehicle, and more particularly a method of controlling a robotic vehicle in an automated storage and retrieval system, a controller and a computer-readable medium.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

When multiple robotic vehicles are operating in the automated storage and retrieval system, there is a risk of conflict and even collision when a first robotic vehicle is instructed to travel to a location to perform a storage or retrieval action at which a second robot is already located and performing a storage or retrieval action. As such, suitable conflict avoidance strategies should be put in place.

### SUMMARY

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a top view of the grid with a first robot and a second robot on the grid; and
Fig. 6 shows a flow chart of controlling a robotic vehicle in an automated storage and retrieval system with conflict management.

### DETAILED DESCRIPTION

In overview, the disclosure relates to controlling a robotic vehicle in an automated storage and retrieval system, to avoid conflicts or even collisions between robots performing storage or retrieval actions at the same location in the system. A controller of the automated storage and retrieval system determines to route a first robotic vehicle to a first location in the automated storage and retrieval system. The controller also determines that a second robotic vehicle is occupying the first location. The controller sends a first command to the first robotic vehicle. The first command is sent in response to determining that the second robotic vehicle is occupying the first location. The first command comprises commanding the first robotic vehicle to travel to a second location that is proximal to the first location. The controller also buffers a second command for the first robotic vehicle while the second robotic vehicle is occupying the first location. The controller then sends the second command to the first robotic vehicle when the second robotic vehicle has vacated the first location. For example, the second command can comprise instructing the first robotic vehicle to travel from the second location to the first location, amongst other possible preparatory actions, before performing a storage or retrieval action at the first location. In this way, a conflict is avoided by sending the first robotic vehicle to the second location rather than the first location. Moreover, this controlling of the first robotic vehicle is efficient because the second command is pre-determined and buffered so that it can be sent to the first robotic vehicle when the second robotic vehicle vacates the first location; this saves time compared to determining the second command after the second robot has vacated the first location.

### Automated storage and retrieval system overview

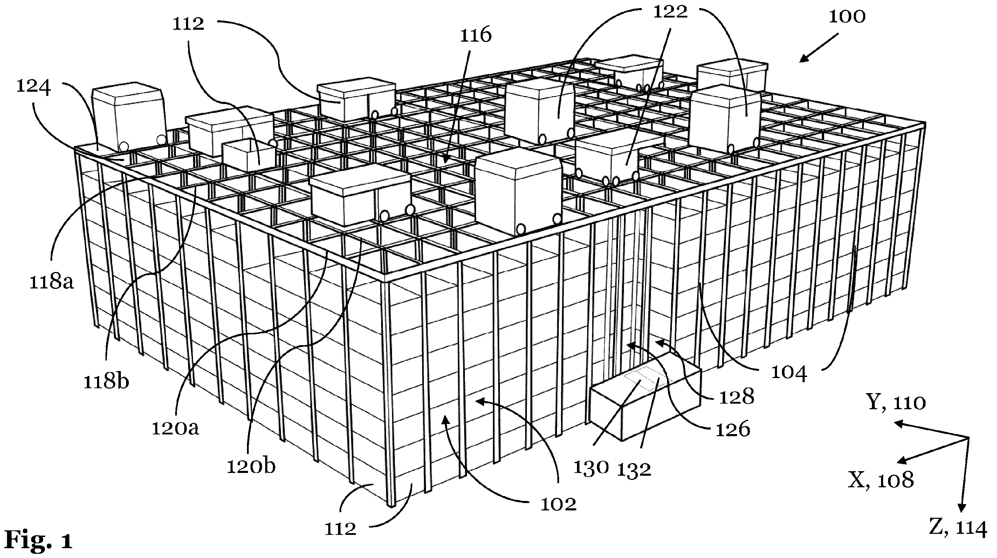

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

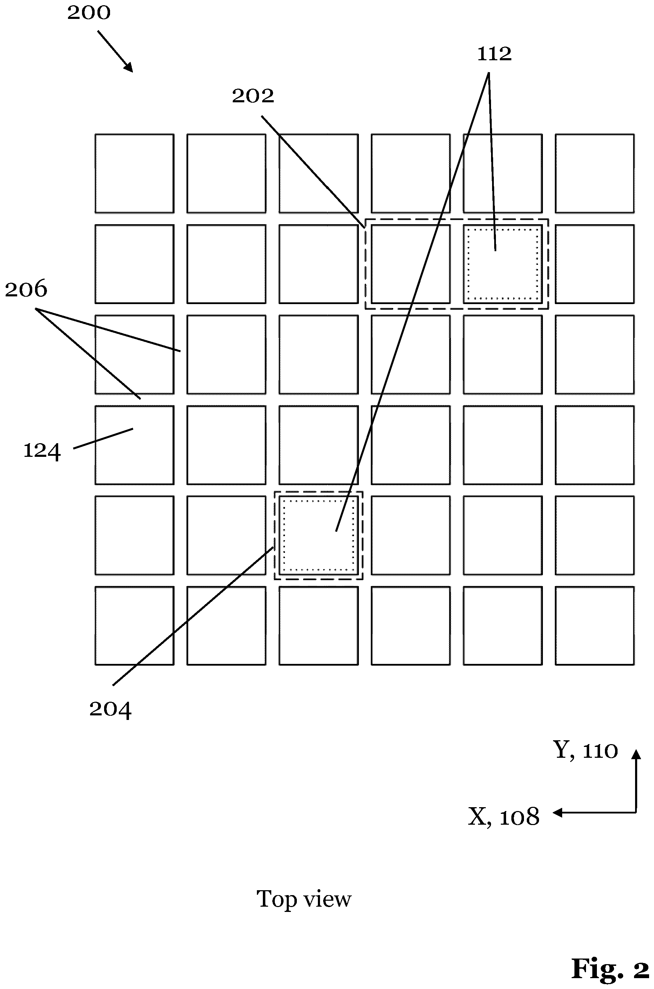

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

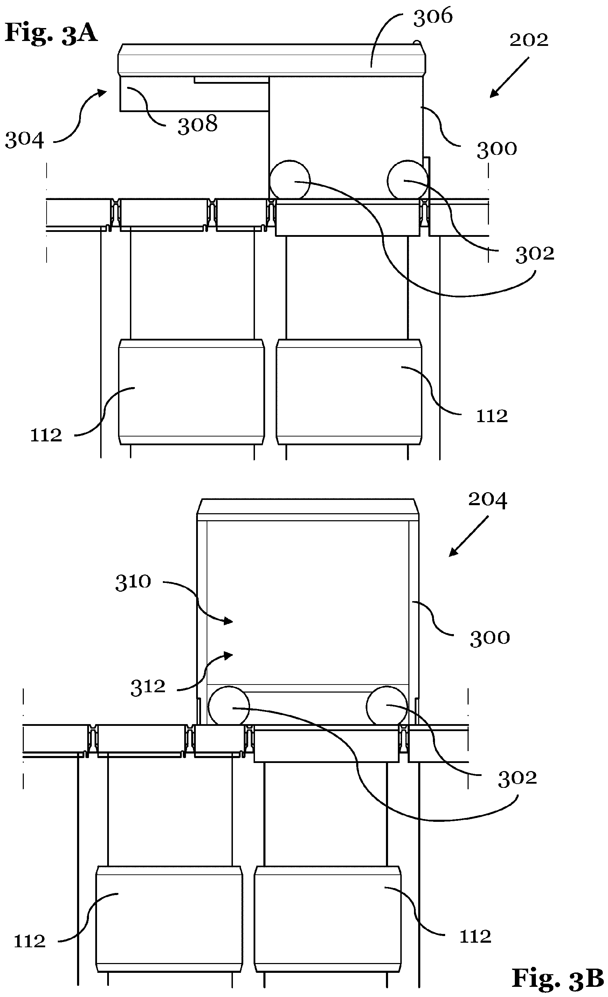

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

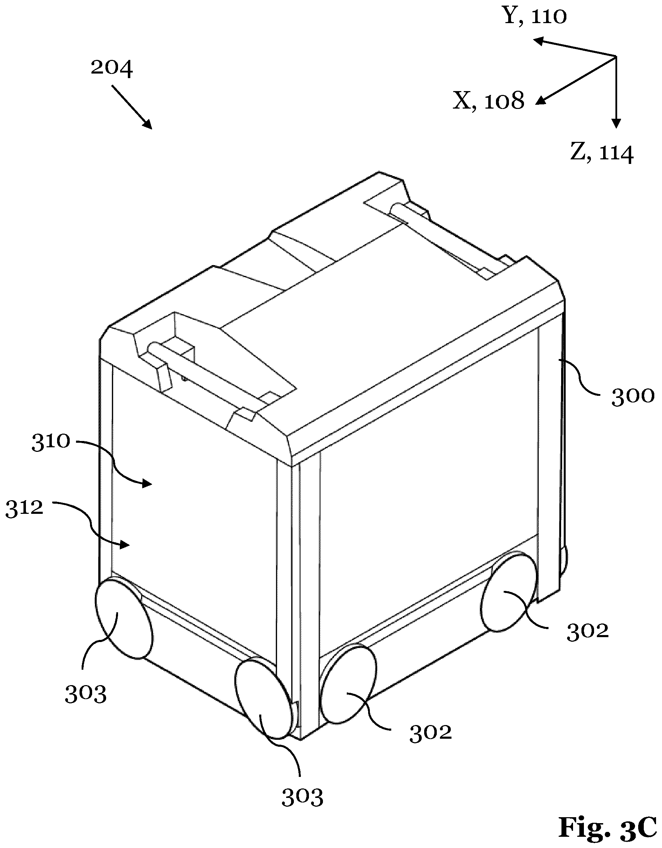

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

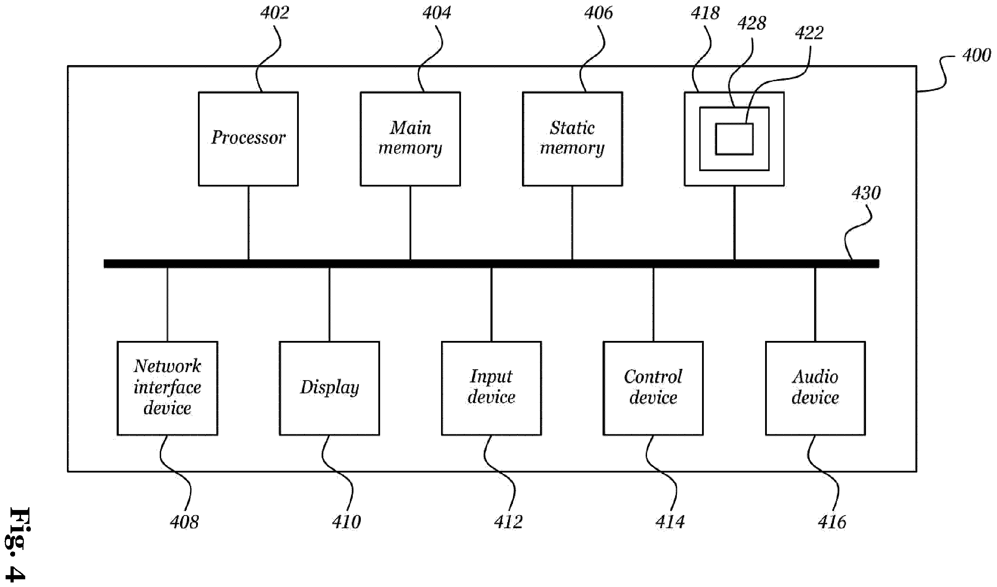

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Conflict Management

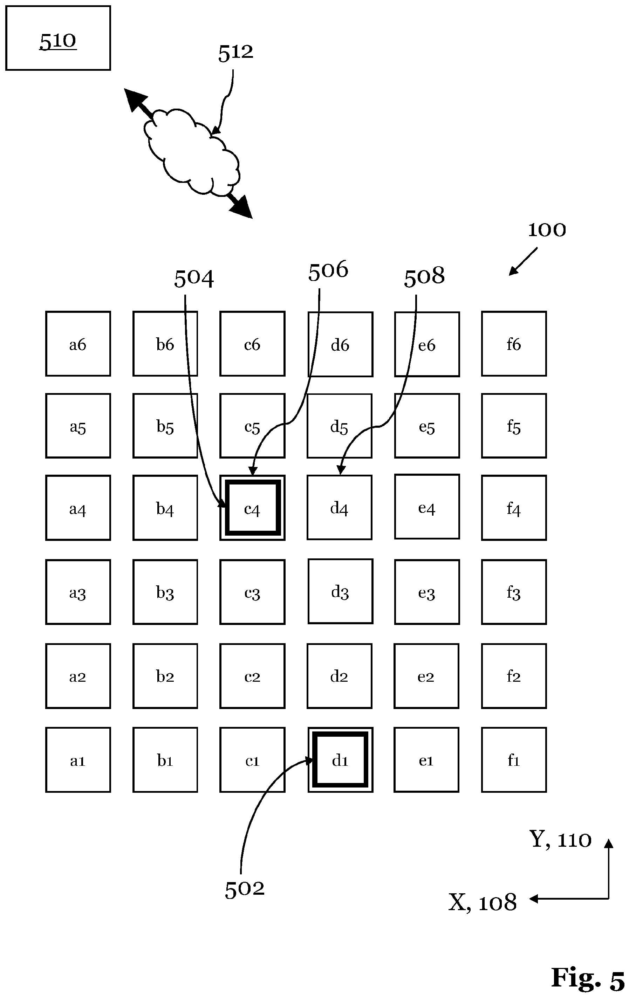

Fig. 5 shows a top-down view of the grid 100, similar to that of Fig. 2, illustrating a surface on which the robots 122 can move. For ease of comprehension, the grid cells are labelled a to f in the X 108 direction, and 1 to 6 in the Y 110 direction. It will be understood, however, that these labels and number of grid cells is only for illustrative purposes and other labelling regimes and numbers of grid cells can be used. As discussed, in the automated storage and retrieval system, robots 122 are routed to locations in the grid 100 to execute storage and retrieval actions. A storing action can comprise storing an item in a storage space in the grid 100 by inserting the item or container into the storage space, and the retrieving action can comprise retrieving an item or container from a storage space in the grid 100 by withdrawing the item from the storage space.

The routing can be controlled by a controller 510 of the automated storage and retrieval system, such as the control system described with reference to Fig. 4. The controller 510 can determine or compute routing and actions for the robots to perform, and communicate this to the robots through communications such by a wireless communication channel 512.

A scenario can be envisaged in which a first robot 502 is located a first grid cell (e.g., cell d1). The first robot 502 is instructed to travel to a target cell 506 (e.g., cell c4) to perform a storage or retrieval action. However, a second robot 504 is already occupying the target cell 506 to perform a separate storage or retrieval action. In the absence of any conflict management, the first robot 502 would collide with the second robot 504.

An existing approach to avoiding the collision involves computing and sending a first command to the first robot 502 that instructs the first robot 502 to travel to an adjacent grid cell 508 (e.g. cell d4) to the target grid cell 506. The adjacent grid cell 508 is a grid cell that is near to the target grid cell 506. Then, when the second robot 504 has completed the storing or retrieving action at the target grid cell 506, and has vacated the target grid cell 506, the controller computes a second command. The second command instructs the first robot 502 to move from the adjacent grid cell 508 to the target grid cell 506 and perform the storing or retrieving action. The second command is then sent to the first robot 502. This approach has efficiency costs in that the controller computes the second command after the second robot 504 has vacated the target grid cell 506 while the first robot 502 is inactive and waiting at the adjacent cell 508 for this computation takes place.

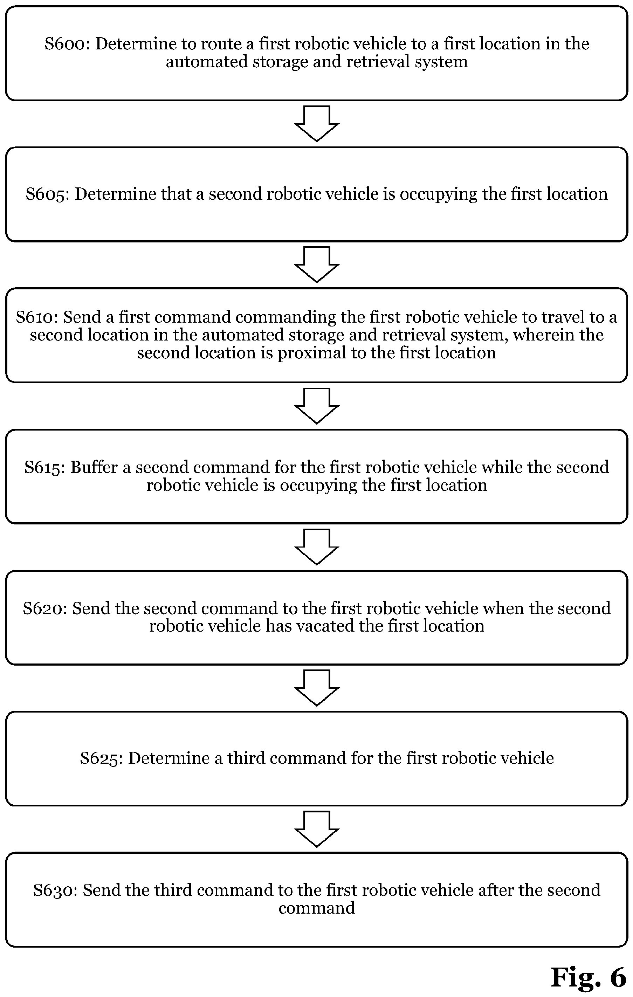

Fig. 6 shows a flow chart of controlling a robotic vehicle in an automated storage and retrieval system with a conflict management scheme that provides enhanced storage and retrieval efficiency. The steps of this flow chart for the improved conflict management scheme will now be described with reference to Fig. 5.

At step S600, the controller 510 determines to route a first robot 502 to a first location 506 in the automated storage and retrieval system.

The first robot 502 can be located at a starting location on the grid, for example cell d1 in the context of Fig. 5. The first location 506 can be considered as the target location' at which the storage or retrieval action is to be performed. In the example of Fig. 5, in which the robots move on a grid, this can be considered as the aforementioned target grid cell (cell c4).

At step S605, the controller 510 determines that a second robot 504 is occupying the first location 506.

This second robot 504 may located on or at the first location 506, and performing a storage or retrieval action from a storage cell at the first location 506. In other examples, while occupying the first location 506, the second robot 504 maybe idling, performing some other action, or may be broken down and awaiting removal, or any other act that inhibits access to the first location 504.

The first robot and second robot can be considered as a first robotic vehicle and a second robotic vehicle which can, for example, be the types discussed with reference to Figs. 3A and 3B, or any other robotic vehicles configured to operate in an automated storage and retrieval system.

At step S610, the controller 510 sends a first command in response to determining that the second robot 504 is occupying the first location 506, wherein the first command comprises commanding the first robot 502 to travel to a second location 508 in the automated storage and retrieval system, wherein the second location 508 is proximal to the first location 506.

The first command can be sent to the first robot 502 as a message, communication packet, signal or the like by wired or wireless communication between the controller 510 and the first robot.

In the example of Fig. 5, this second location 508 can be considered as the adjacent grid cell (e.g., cell d4), which is a grid cell adjacent to the target grid cell (e.g., cell c4) that is the first location 506. In such an example, the second location 508 is a second grid cell (e.g., grid cell e4) that is immediately adjacent to the first grid cell (e.g., grid cell d4) corresponding to the first location 506.

It is noted, however, that the second location 508 does not need to be a grid cell that is immediately adjacent to the target grid cell that is the first location 506. In an alternative, the second grid cell could be separated from the first grid cell by one grid cell. In such an example with respect to the grid 100 of Fig. 5, the second grid cell may be for example cell e4. In further alternatives, the second grid cell may be separated from the first grid cell by two cells (e.g., cell f4), or separated by more than two cells. More generally, the second location 508 is a location that is near to (i.e., proximal to) the first location 506 in the automated storage and retrieval system.

The first robot 502 can be positioned at the starting location (e.g., cell d1), and then receive the first command sent by the controller 510. The first robot 502 can then execute the received first command and move to the second location 508 (e.g., cell d4) in response to having received the first command. The first robot 502 can then wait at the second location 508, for example while the second robot 504 is occupying the first location 506 (i.e., the target grid cell).

At step S615, the controller 510 buffers a second command for the first robot 502 while the second robot 504 is occupying the first location 506.

The second command can be considered as a 'preparatory command' whereby the command is prepared in advance for a subsequent action of the first robot 502 while the second robot 504 is occupying the first location. The second command can comprise a preparatory action that, when executed by the first robot 502, prepares the first robot 502 for a subsequent storing or retrieving action at the first location 506.

The buffer can be considered buffer storage that is at or accessible by the controller 510.

This buffered second command can be determined or computed at substantially the same time, or in the same processing window, as when the controller 510 determines the first command. That is, the controller 510 can determine both the first command and the second command, then send the first command and buffer the second command such that the second command can be ready to send to the first robot 502. The second command can be determined and buffered before the first robot 502 moves to the second location 506, or while the first robot 502 is moving to the second location 506. Another way to consider this is that the second command can be determined and buffered while the second robot 504 is performing its storage or retrieval action, or before the second robot 504 has vacated the first location 506. In other words, the second command is determined and buffered while the second robot 504 is occupying the first location 506.

When the second robot 504 has completed its storing or retrieving action, and has vacated the first location 506, the second robot 504 can send a move report to the controller 510 that indicates that it has vacated the first location 506.

The move report can be sent to the controller 510 as a message, communication packet, signal or the like by wired or wireless communication between the second robot 504 and the controller 510.

The move report can be considered as indication communicated from the second robot 504 to the controller 510 that informs the controller 510 that the second robot 504 has vacated the first location 506.

For example, the sending of the move report could be triggered when the second robot 504 moves off the first location 506. That is, as the second robot 504 moves off the first location 506, it sends the move report to the controller 510. Alternatively, the move report could be sent by the second robot 504 to the controller 510 when the second robot 504 completes a storing or retrieving action at the first location 506. For example, if the second robot 504 is instructed to move from the first location when the storing or retrieving action is complete, the controller 510 can assume that the second robot 504 has moved off the first location 506 when the second robot 504 indicates that the storing or retrieving action is complete.

In another alternative, the second robot 504 could send the move report to the controller 510 when the second robot has arrived at its next location. As such, the controller can then assume that the first location 506 has been vacated.

The controller 510 can receive the move report from the second robot 504 and then send the second command to the first robot 502.

At step S620, the controller 510 sends the second command to the first robot 502 when the second robot 504 has vacated the first location 506.

The second command can be sent to the first robot 502 as a message, communication packet, signal or the like by wired or wireless communication between the controller 510 and the first robot 502.

The controller 510 can send the second command in response to receiving the move report from the second robot 504. The controller 510 can alternatively/additionally become aware that the second robot 504 has vacated the first location 506 by other methods such as by a sensor positioned at the location and connected to the controller 510, wherein such a sensor detects the presence or absence of a robot by any suitable means.

In another alternative, the controller 510 can determine that the second robot 504 has vacated the first location 506 because the controller 510 has sent a command to the second robot 504 instructing it to move to a next location. The controller 510 can then assume that the second robot 504 has moved from the first location 506 because the controller 510 has instructed it to do so.

As such, more generally, the controller 510 can send the second command to the first robot 502 in response to determining that the second robot 504 has vacated the first location 506.

The first robot 502 can then receive the second command, and execute the second command.

In this way, the preparatory action instructed by the second command can be executed by the first robot 502 without the controller 510 needing to determine or compute the action after the second robot 504 has vacated the first location. Efficiency is therefore gained by this front-loading of the processing to prepare the first robot 502 because the first robot 502 is not idle at the second location 508 while the controller 510 determines the next action for the first robot 502 after the second robot 504 has vacated the first location 506. Instead, the next action for the first robot 502 is already determined, buffered and ready to send when the second robot 504 vacates the first location 506. The first robot 502 can then be quickly instructed to perform the next action, rather than idling any longer than necessary at the second location 508. This time saving can have a stochastic effect over the course of multiple robot operations and lead to significant time savings in operations. Consequently more capacity is provided for additional storage and retrieval actions to be executed in a fixed period of time.

The second command can comprise commanding the first robot 502 to travel from the second location to the first location.

That is, the preparatory action instructed in the second command can instruct the first robot 502 to move to the first location 506. Because the second command is pre-determined and held in the buffer, it can be sent to the first robot 502 as soon as the second robot 504 has vacated the first location 506, therefore allowing the first robot 502 to travel to the first location 506 immediately (or almost immediately) after the second robot 504 has vacated the first location 506. The controller 510 does not need to determine any routing for the first robot 502 after the second robot 504 has vacated the first location 506 because this routing is already held in the buffer as the second command. The controller 510 only needs to send this buffered second command. This improves efficiency because any idle time for the first robot 502 is minimised after the second robot 504 has vacated the first location 506 because the first robot 502 does not need to wait for the controller 510 to determine the routing.

Additionally or alternatively, the second command can comprise commanding the first robot 502 to perform an action when at the first location 506.

The action can comprise the first robot 502 moving a tool into a storage space at the first location 506, wherein the tool is configured to store an item in or retrieve an item from the storage space at the first location 506. That is, the preparatory action instructed by the second command can instruct the first robot 502 to move a tool into a storage space at the first location 506.

The tool can be the gripping device described with reference to Figs. 3A and 3B. In other words, the action can comprise the first robot 502 lowering its griping device into the storage grid in order to subsequently grip onto and retrieve a container (or item) stored in the grid, or in order to subsequently release a container (or item) back into the storage grid for storage.

The moving of the tool into the storage space can be considered as a separate action to the physical storing or retrieving of the item. That is, in an overall process for storing or retrieving an item there can be two actions: a first action in the tool being moved into the storage space, and then a second action (the store/retrieve action) in which the tool engages or releases the item.

Because the action of moving the tool into the storage space is pre-determined, held in the buffer, and instructed to the first robot 502 when the second robot 504 has vacated the first location 506, efficiency can be gained because the first robot 502 can already be moving the tool into the storage space when at the first location 506 while the controller can be determining or computing the next action for the robot (e.g., the next action comprising engaging or releasing the item, and in some cases further steps when the item is engaged or released). This can improve efficiency compared to the first robot 502 waiting at the first location in an idle state while the controller determines the next action for the first robot 502.

At step S625, the controller 510 can be configured to determine a third command for the first robot 502. The third command can comprise commanding the first robot 502 to perform the storing action or a retrieving action at the first location 506. Then, at step s630, the controller 510 can send the third command after sending the second command.

The third command can be sent to the first robot 502 as a message, communication packet, signal or the like by wired or wireless communication between the controller 510 and the first robot.

In some examples, the controller 510 can determine the third command while the first robot 502 is performing the second command. Additionally, or alternatively, the controller 510 can send the third command while the first robot 502 is performing the second command.

The first robot 502 can be performing the second command, that had been buffered at the controller 510, while the controller 510 determines and/or sends the third command. This third command can comprise the store or retrieve action (i.e., the engaging or releasing of an item, and in some cases next steps after the item is engaged or released). So, as the first robot 502 is moving to the first location 506, and performing an action such as lowering the gripping tool into the storage column, the controller 510 can be determining the storing or retrieving action to be performed at a subsequent step. With this, efficiency can be gained through time saving because the first robot 502 can be moving and/or performing an action while the controller 510 is determining the next action (i.e., the third command) for the first robot 502, and sending this to the first robot 502. This avoids idle time for the first robot 502.

In a specific example, the second command may comprise both an instruction for the first robot 502 to move from the second location 508 to the first location 506, and to move the tool into the storage space. Such a second command can instruct the first robot 502 to move to the first location 506, and then lower the gripping device into the storage grid. While the first robot 502 is executing the second command, the controller 510 can be determining and/or sending the third command (for example, determining the storage or retrieval action to be performed by releasing or engaging the item into the storage grid). In this way, efficiency is gained because the gripping device will already be at least partially lowered into the storage grid when the instruction to perform the store or retrieve action is received. This is time-saving compared to waiting to receive the command for the store or retrieve action before beginning to lower the gripping device into the storage grid.

The benefit of this can be particularly useful when applied to large or deep storage grids as the first robot 502 can be making progress in lowering the gripping device potentially through a significant distance into the storage grid while the controller 510 determines the third command (the storage or retrieval action by releasing or engaging the item), thereby obviating a potentially lengthy period of time in lowering the gripping device after the storage or retrieval command has been determined because the gripping device is already lowered.

The controller 510 can be configured to determine the third command when the second robot 504 vacates the first location 506; for example, in response to receiving the move report from the second robot 504. The controller 510 can, in some cases, buffer the third command after this determining or computing of the third command. In some cases, the controller 510 may buffer the third command until the first robot 502 is at the first location 506 (for example, the controller 510 can receive a reporting message from the first robot 502 indicating that it is at the first location 506), and then send the buffered third command to the first robot 502.

Alternatively, the controller 510 can be configured to determine the third command in response to the second robot 504 completing its storing or retrieving action. In some cases, the completion of the storing or retrieving action can be considered to take place when the robot has engaged the container (for retrieval) or released the contained (for storage). The second robot 504 can send a notification message to the controller 510 indicating that this storing or retrieving action has been completed, and in response to this the controller 510 can determine the third command for the first robot 502. The controller 510 may buffer the third command until the first robot 502 is at the first location 506 (for example, the controller 510 can receive a reporting message from the first robot 502 indicating that it is at the first location 506), and then send the buffered third command to the first robot 502. Upon completion of the storing or retrieving action by the second robot 504, the tool (e.g., gripping device) of the second robot 502 may still be inserted in the storage grid. As such, the aforementioned buffering of the third command can be utilised to allow time for the second robot 504 to retract the tool from the storage grid and vacate the first location 506 before the first robot 502 is instructed to perform the actions associated with the third command.

The front-loaded computation or determination of the third command can be beneficial in improving operational efficiency.

In an alternative implementation, the action comprised in the second command can be to perform the storing or retrieving action in the automated storage and retrieval system, at the first location 506, by the first robot 502. In this alternative, there maybe no third command. Instead, the controller 510 buffers the entire command for the first robot 502 to both move from the second location 508 to the first location 506, and perform the storing or retrieving action when arriving at the first location 506. In this case, the storing or retrieving action can comprise both moving the tool into the storage space and engaging/releasing the item in the storage cell. That is, there is no third command to engage/release the item because this is encompassed by the second command. This can bring about efficiency gains because the processing for the controller 510 to determine the routing for the first robot 502 to the first location 506 and the storing or retrieving action when at the first location 506 is all front-loaded when determining to send the first robot 502 to the second location 508 that is proximal to the first location 506. This can then be held in the buffer and sent to the first robot 502 when the second robot 504 vacates the first location 506. In this way, the first robot 502 being in an idle state any longer than necessary at the second location 508 is avoided because the first robot 502 does not need to be waiting at the second location 508 in an idle state while the controller 510 determines the instructions to move to the first location 506 and perform the storing or retrieving action as these instructions have already been predetermined and buffered.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of controlling a robotic vehicle in an automated storage and retrieval system, wherein the method comprises:
determining, by a controller of the automated storage and retrieval system, to route a first robotic vehicle to a first location in the automated storage and retrieval system;
determining, by the controller, that a second robotic vehicle is occupying the first location;
sending, by the controller to the first robotic vehicle, a first command in response to determining that the second robotic vehicle is occupying the first location, wherein the first command comprises commanding the first robotic vehicle to travel to a second location in the automated storage and retrieval system, wherein the second location is proximal to the first location;
buffering, at the controller, a second command for the first robotic vehicle while the second robotic vehicle is occupying the first location; and
sending, by the controller, the second command to the first robotic vehicle when the second robotic vehicle has vacated the first location.

2. The method of claim 1, wherein the second command comprises commanding the first robotic vehicle to travel from the second location to the first location.

3. The method of any preceding claim, wherein the second command comprises commanding the first robotic vehicle to perform an action when at the first location.

4. The method of claim 3, wherein the action comprises the first robotic vehicle moving a tool into a storage space at the first location, wherein the tool is configured to store an item in or retrieve an item from the storage space at the first location.

5. The method of any preceding claim, wherein the method further comprises:
determining, by the controller, a third command for the first robotic vehicle, wherein the third command comprises commanding the first robotic vehicle to perform a storing action or a retrieving action at the first location; and
sending, by the controller to the first robotic vehicle, the third command after sending the second command.

6. The method of claim 5, wherein the controller determines the third command while the first robotic vehicle is performing the second command; and/or
wherein the controller sends the third command to the first robotic vehicle while the first robotic vehicle is performing the second command.

7. The method of claim 3, wherein the action comprises performing a storing or retrieving action in the automated storage and retrieval system, at the first location, by the first robotic vehicle.

8. The method of any preceding claim, wherein the method further comprises:
receiving, at the first robotic vehicle, the first command sent by the controller;
moving, by the first robotic vehicle, to the second location in response to the receiving the first command;
waiting, by the first robotic vehicle, at the second location;
receiving, at the first robotic vehicle, the second command sent by the controller.

9. The method of any preceding claim, further comprising:
receiving, at the controller from the second robotic vehicle, a move report indicating that the second robotic vehicle has vacated the first location; and
sending the second command to the first robotic vehicle when the second robotic vehicle has vacated the first location comprises sending the second command to the first robotic vehicle in response to the receiving the move report from the second robotic vehicle.

10. The method of claim 9, wherein the method further comprises:
sending, by the second robotic vehicle to the controller, the move report indicating that the second robotic vehicle has vacated the first location when the second robotic vehicle vacates the first location.

11. The method of any preceding claim, wherein the automated storage and retrieval system comprises a grid, and the first robotic vehicle and second robotic vehicle are configured to traverse the grid to perform the storing and retrieving actions at storage spaces corresponding to cells in the grid.

12. The method of claim 11, wherein the second location is a second grid cell that is immediately adjacent to a first grid cell corresponding to the first location; and/or
wherein the second location is a second grid cell that is separated from a first grid cell corresponding the first location by one grid cell.

13. A controller configured for using in an automated storage and retrieval system, the controller configured to:
determine to route a first robotic vehicle to a first location in the automated storage and retrieval system;
determine that a second robotic vehicle is occupying the first location;
send a first command in response to determining that the second robotic vehicle is occupying the first location, wherein the first command comprises commanding the first robotic vehicle to travel to a second location in the automated storage and retrieval system, wherein the second location is proximal to the first location;
buffer a second command for the first robotic vehicle while the second robotic vehicle is occupying the first location;
send the second command to the first robotic vehicle when the second robotic vehicle has vacated the first location.

14. An automated storage and retrieval system comprising the controller of claim 13, and further comprising the first robotic vehicle and the second robotic vehicle;
wherein the first robotic vehicle is configured to:
receive the first command sent by the controller;
move to the second location in response to the receiving the first command;
wait at the second location;
receive the second command sent by the controller, and
move to the first location in response to receiving the second command;
wherein the second vehicle robotic vehicle is configured to:
send a move report indicating that the second robotic vehicle has vacated the first location when the second robotic vehicle vacates the first location.

15. A computer-readable medium storing instructions that, when executed by one or more processors of a controller in an automated storage and retrieval system, cause the controller to perform steps comprising:
determining to route a first robotic vehicle to a first location in the automated storage and retrieval system;
determining that a second robotic vehicle is occupying the first location;
sending a first command in response to determining that the second robotic vehicle is occupying the first location, wherein the first command comprises commanding the first robotic vehicle to travel to a second location in the automated storage and retrieval system, wherein the second location is proximal to the first location;
buffering a second command for the first robotic vehicle while the second robotic vehicle is occupying the first location;
sending the second command to the first robotic vehicle when the second robotic vehicle has vacated the first location.
